# EUROPÄISCHE PATENTSCHRIFT

(11) **EP 1 992 735 B1**
(45) Veröffentlichungstag und Bekanntmachung des Hinweises auf die Patenterteilung: **12.10.2011**
(21) Anmeldenummer: 08015516.1
(22) Anmeldetag: 10.01.2004
(51) Int. Cl.: D21B 1/32, D21F 1/70, D21D 5/18, B03D 1/14

(54) **Verfahren und Vorrichtung zur Belüftung von Suspensionen**
Method and device for aerating suspensions
Procédé et dispositif d'aération des suspensions

(30) Priorität: 24.01.2003 AT 892003
(43) Veröffentlichungstag der Anmeldung: 19.11.2008
(62) Teilanmeldung aus: 04000395.6
(73) Patentinhaber: Andritz AG, 8045 Graz (AT)
(72) Erfinder: Gabl, Helmuth, Dipl.Ing. Dr., 8046 Graz (AT)
(74) Vertreter: Schweinzer, Friedrich

(56) Entgegenhaltungen:
- EP-A- 1 124 001
- DE-A- 3 005 681
- DE-A- 3 144 561

## Beschreibung

Die Erfindung betrifft ein Verfahren zur Belüftung von Suspensionen, insbesondere zur Flotation, beispielsweise beim Deinken von Faserstoffsuspensionen, mit zumindest zwei oder mehreren Stufen und / oder Zellen. Weiters betrifft die Erfindung eine Vorrichtung zur Durchführung des Verfahrens.

Ein derartiges Verfahren ist z.B. aus der EP 1 124 001 A2 bekannt, wobei die einzelnen Flotationsstufen auch z.B. nach der US 4,255,262, EP 0 243 690 oder DE 31 20 202 ausgeführt sein können.

In der DE 31 44 561 A ist ein Verfahren offenbart, bei dem die Faserstoffsuspension einer Flotationsvorrichtung zugeführt und flotiert, sowie im Anschluss daran gewaschen wird. Nach der Waschung kann eine weitere Flotationsvorrichtung vorgesehen sein.

Derartige Verfahren werden zur Abtrennung von Störstoffen und Druckfarbenpartikel aus insbesondere in der Altpapieraufbereitung hergestellten Faserstoffsuspensionen eingesetzt. Durch die Anwendung derartiger Verfahren wird eine unspezifische Abtrennung von mineralischen Bestandteilen (z.B. Füllstoffen etc.) bewirkt, da diese in der chemischen Oberflächenbeschaffenheit (insbesondere Ladung) unterschiedlich zu den relativ leicht hydrophobierbaren Druckpartikeln in der Faserstoffsuspension reagieren. Zudem ist das spezifische Gewicht der mineralischen Anteile ca. doppelt bis dreifach höher als das der Druckpartikel. Bei den bekannten Verfahren treten jedoch bei der selektiven Flotation einige Nachteile auf. Wird z.B. versucht mittels Änderungen im Prozess eine gezielte Abscheidung von Füllstoffen zu erzielen, tritt zwangsläufig eine Reduktion der Effizienz in der Druckfarbtrennung auf, wodurch zusätzliche Änderungen in der Begasung, Anpassungen an die Rohstoffschwankungen und Durchsatzänderungen erforderlich werden. Weiters steigt bei Erhöhung der Überlaufmenge für eine Erhöhung der Abscheidung der mineralischen Stoffe auch der Faserverlust im gleichen Verhältnis mit an, wodurch der Aufwand zur Entsorgung und der Rohstoffeinsatz erhöht werden.

Die Erfindung hat das Ziel, bei Aufrechterhaltung der Strömungsführung und Begasung die obigen Nachteile zu reduzieren bzw. zu vermeiden.

Dies wird durch die Merkmale der Ansprüche 1 bzw. 7 gelöst.

Dadurch wird es möglich, Ascheanteile in einfacher Weise selektiv abzuscheiden. Es ist vorteilhaft, wenn auch in jeder Zelle ein eigener, getrennter Flüssigkeitskreislauf vorgesehen ist.

Wird die Feststoffsuspension vor Eintritt in die Sekundärzellen auf ca. 0,6 -1,4 % Stoffdichte, insbesondere 0,8 - 1,3 % Stoffdichte, verdünnt, so kann die Flotationseffizienz gesteigert werden.

Werden dabei die Gutstoffströme von zumindest zwei Waschprozessen gemeinsam einem weiteren Waschprozess (sogenannt Doppelwäsche) zugeführt ist noch eine weitere Steigerung der Ascheabscheidung bei vermindertem Faserstoffverlust erzielbar.

Besonders günstig hat sich erwiesen, wenn die zumindest zwei Waschprozesse in den Kreislauf von Primärzellen zwischengeschaltet sind.

Vorteilhaft ist es, wenn der Gutstoff des Gesamtverfahrens bei einem Eingangsfüllstoffanteil von ca. 23 % und höher einen Ascheanteil von unter ca. 20 %, vorteilhaft unter 15 % aufweist. Dadurch kann der Gutstoff bei geringem Faserverlust wieder in den Prozess zurückgeführt werden.

Weiters betrifft die Erfindung eine Vorrichtung zur Belüftung von Suspensionen, insbesondere zur Flotation, beispielsweise beim Deinken von Faserstoffsuspensionen, mit zumindest zwei oder mehreren Stufen und / oder Zellen. Diese ist erfindungsgemäß dadurch gekennzeichnet, dass in einer Schaumrinne gesammelter Überlauf aus zumindest einer Primärzelle zumindest einer Sekundärzelle zuführbar ist, deren Gutstoff wieder der Primärzelle zuführbar ist, wobei zumindest ein Wäscher zwischen den Zellenstufen, d.h. zwischen Primär- und Sekundärzellen zwischengeschaltet ist.

Voreilhaft ist es, wenn in jeder Zelle ein eigener, getrennter Flüssigkeitskreislauf vorgesehen ist.

Wenn die Gutstoffströme der zumindest zwei Wäscher gemeinsam einem weiteren Wäscher zugeführt werden, ist noch eine weitere Steigerung der Ascheabscheidung erzielbar.

Eine weitere Reduzierung der Faserverluste bei Verkleinerung der Volumenströme aus dem Flotations-Wasch-System kann durch Nachwäsche der gesammelten Rejektströme erreicht werden.

Weiters hat sich vorteilhaft erwiesen dass die zumindest zwei Wäscher in den Kreislauf von Primärzellen zwischengeschaltet sind.

Eine günstige Ausgestaltung ergibt sich, wenn der bzw. die Wäscher als Rotationswäscher mit vertikaler Rotorachse oder alternativ als Walzenwäscher ausgebildet ist bzw. sind.

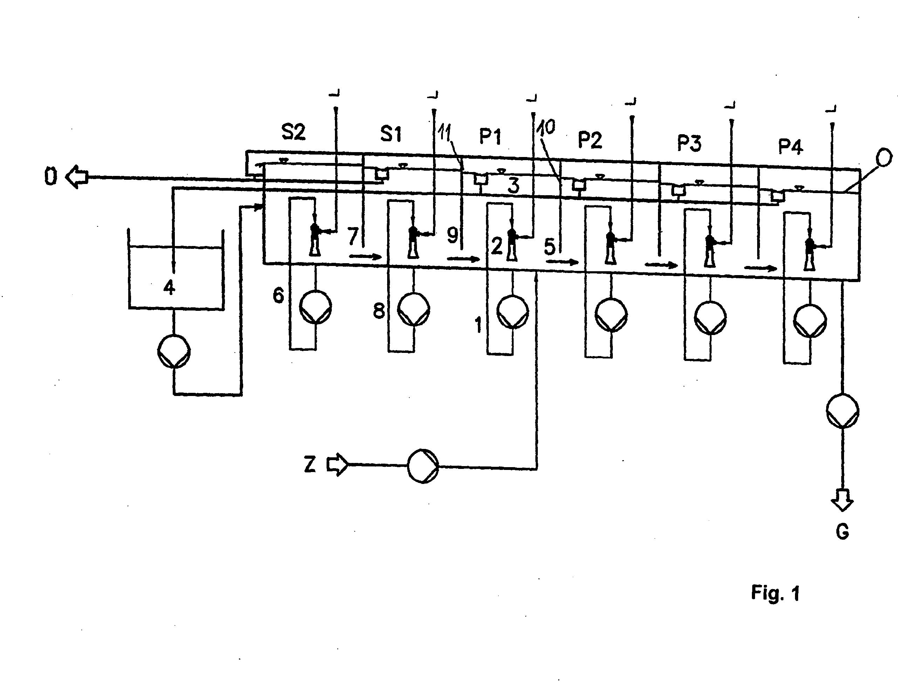

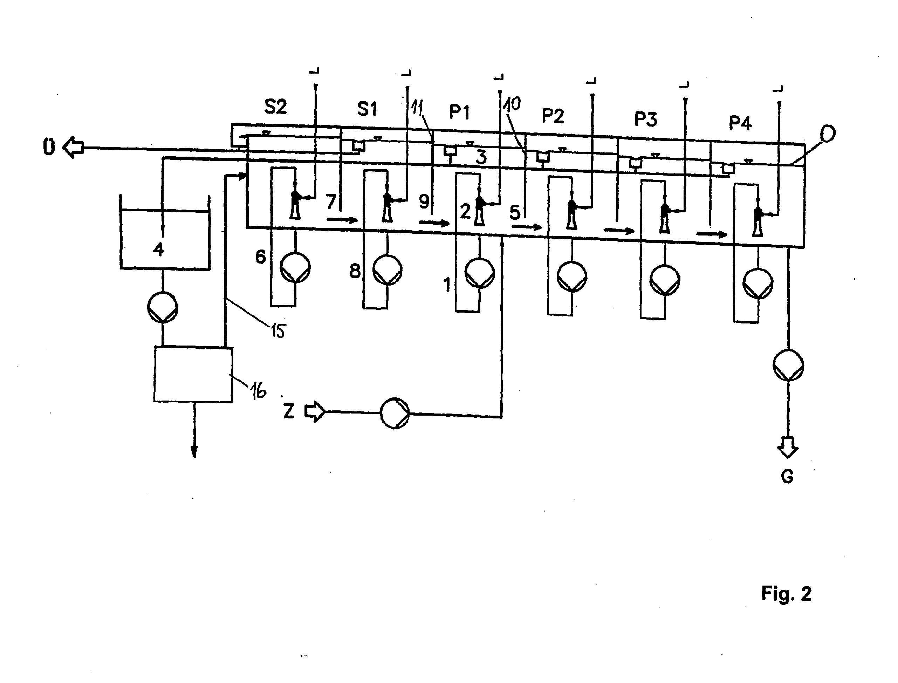

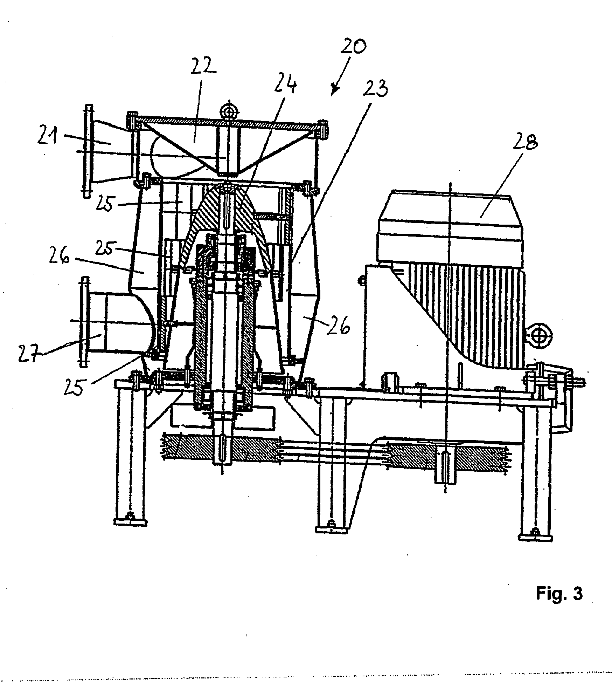

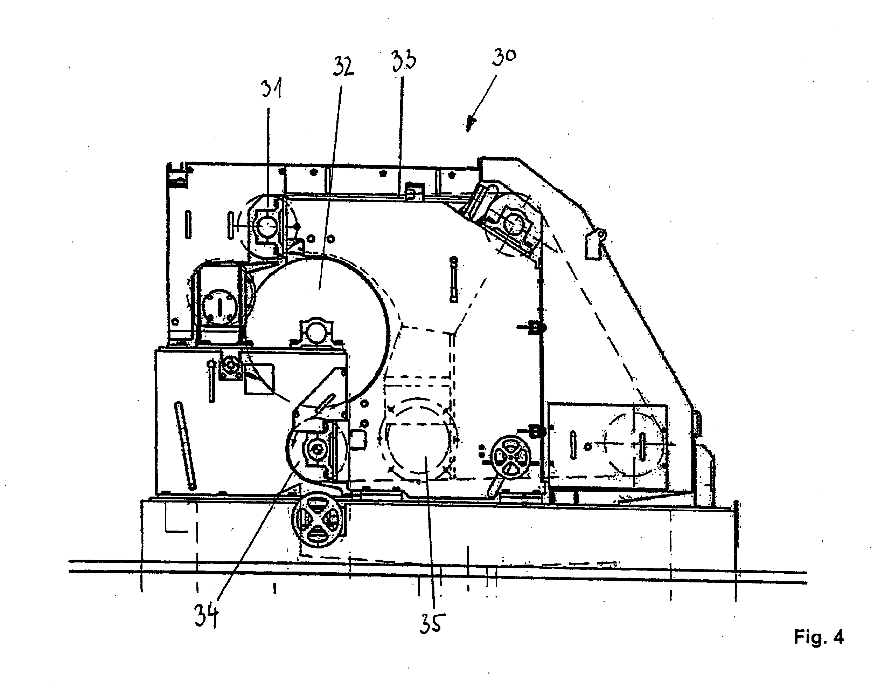

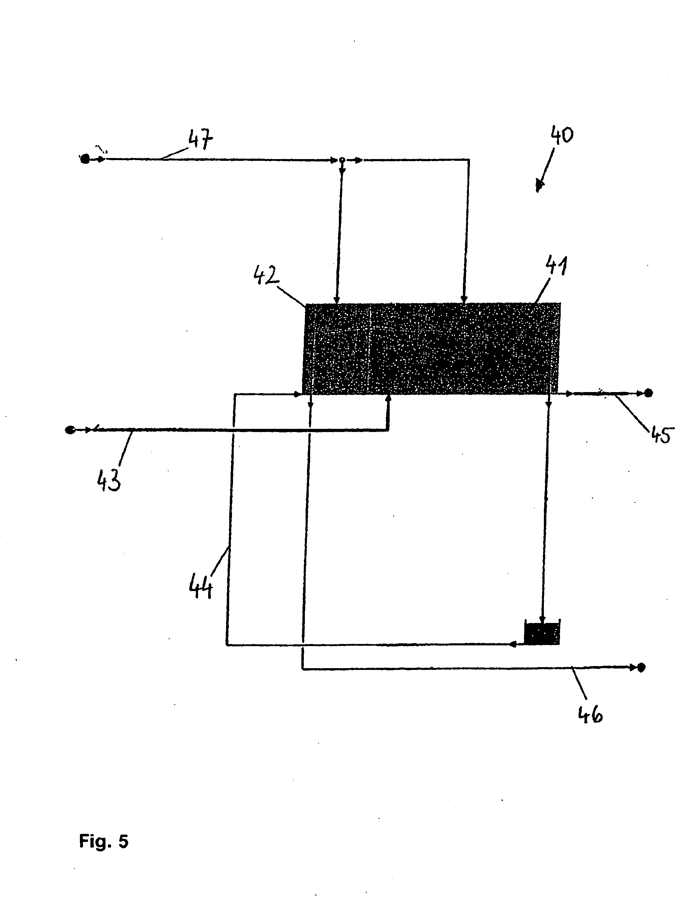

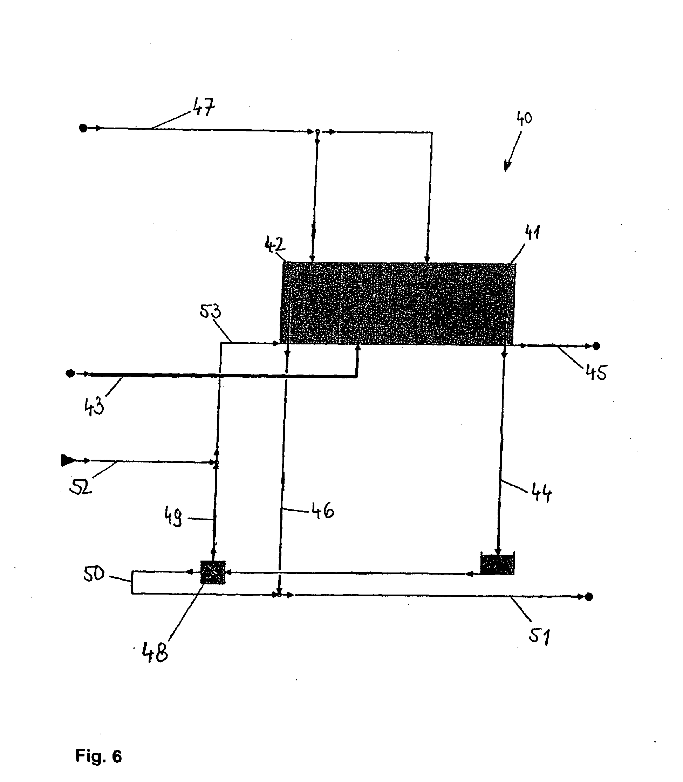

Die Erfindung wird nun anhand der Zeichnungen beispielhaft beschrieben, wobei Fig. 1 eine Flotationsanlage nach dem Stand der Technik, Fig. 2 eine Variante der Erfindung, Fig. 3 eine Variante eines Wäschers, Fig. 4 eine alternative Variante eines Wäschers, Fig. 5 eine Stoffbilanz nach dem Stand der Technik und Fig. 6 eine Stoffbilanz gemäß der Variante der Erfindung nach Fig. 2 darstellt.

In Fig. 1 ist eine Flotationsanlage nach dem Stand der Technik mit vier Primärzellen P1, P2, P3, P4 und zwei Sekundärzellen S1, S2, schematisch dargestellt. Der Zulauf der Faserstoffsuspension Z wird an geeigneter Stelle in die erste Primärzelle P1 eingebracht. Die Blasen werden über den vom Zulauf entkoppelten Kreislauf 1 innerhalb dieser Zelle mit dem Injektor 2 durch Ansaugung von Luft L und Vermischen mit der Suspension erzeugt. Die gesamte Flotationsanlage ist zum überwiegenden Teil mit Suspension gefüllt, an deren Oberfläche O sich ein Schaum bildet, der einen möglichst großen Teil der auszuflotierenden

Stoffe und Druckfarbenpartikel enthält. Der von Druckfarben und Störstoffen in der ersten Primärzelle P1 gereinigte Gutstoff tritt durch eine am Böden angeordnete Öffnung 5 in der Trennwand 10 zur zweiten Primärzelle P2 über. Dort und in allen weiteren Primärzellen wird die Suspension in gleicher Weise, mit Blasenerzeugungsinjektoren, die durch zelleninterne Kreisläufe betrieben werden, behandelt und tritt am Ende der Anlage als Gutstoff G aus. Der gesammelte Schaum aller Primärzellen P1 bis P4 kann über eine Schaumrinne 3 in einen Behälter 4 abfließen. Aus diesem Zwischenbehälter 4 wird der inzwischen weitgehend entschäumte Überlauf in die Sekundärzelle S2 eingebracht. Die Begasung erfolgt dort wieder um den zelleninternen Kreislauf 6. Der Übertritt des Gutstoffes der Sekundärzelle S2 in die Sekundärzelle S1 erfolgt durch die am Boden angeordnete Öffnung 7. Nach der Begasung mittels Kreislaufs 8 kann der Schaum der Sekundärzellen als Überlauf Ü abgeführt werden. Der Gutstoff der Sekundärzelle S1 gelangt durch die am Boden angeordnete Öffnung 9 in der Trennwand 11 in die erste Primärzelle P1.

Grundsätzlich wird die Waschstufe erfindungsgemäß zwischen die Primär- und Sekundärstufe geschaltet.

Wird erfindungsgemäß eine Vorwärtsschaltung des gesamten Produktionsstromes erwünscht oder eine Wäsche in eine bereits vorhandene DIP (de-inked pulp) Anlage nachinstalliert, kann der Gesamtstrom auch zwischen den Zellen entascht werden. Zur Erhaltung der Flotationseffizienz ist der Kreislaufstrom zu öffnen und vorteilhafterweise auf ca. 0,8 bis 1,3 % Stoffkonsistenz nachzuverdünnen

In Fig. 2 wird der Zulaufstrom 15 zur Sekundärzelle mit einem Wäscher 16 als Entaschungsvorrichtung behandelt, so dass die hydraulische Belastung der Sekundärzellen durch die Entfernung von Asche und Feinstoffen reduziert wird. Wesentlich dabei ist aber die gezielte Entfernung der Asche. Die Stoffbilanzen einer derartigen Anordnung sind gemäß Stand der Technik in Fig. 5 und gemäß der Erfindung in Fig. 6 dargestellt. Die in Fig. 2 dargestellte Variante zeigt die wirksamste Form der Teilstromwäsche, da beim Flotationsprozess im Schaum bereits eine starke Anreicherung der mineralischen Inhaltsstoffe stattfindet.

Beim Entaschungsvorgang wird der Gutstoff eingedickt. Damit die Stoffdichte bei der Sekundärflotation nicht zu hoch ist, wird die Faserstoffsuspension im Normalfall auf ca. 0,6 bis 1,4 % Stoffdichte verdünnt. Dieser Vorgang ist bei allen Entaschungsprozessen innerhalb der Flotation notwendig.

In Fig. 3 ist eine mögliche Variante einer Entaschungsvorrichtung in Form eines Rotationswäschers 20 dargestellt. Die Suspension wird über den Zulaufstutzen 21 dem Wäscher 20 zugeführt. Durch einen stationären Einbau 22 wird der Suspensionsstrom strömungsgünstig in das Innere des zylindrischen Siebkorbes 23 umgelenkt. In diesem Raum befindet sich ein Rotor 24, der hier eine parabolische Form aufweist und mit Flügeln 25 versehen ist. Der durch das Sieb 23 hindurchgetretene Gutstoff wird in einem Akzeptraum 26 gesammelt und über den Akzeptauslass 27 ausgetragen. Der Rotor 24 wird durch Antrieb 28 angetrieben. Diese Art von Apparat hat einen geringen Energieverbrauch, was durch die gute Strömungsführung, insbesondere den parabolischen Rotor, erreicht wird. Durch spezielle Siebe und Flügelausführungen wird eine hohe Entaschung erzielt.

Fig. 4 zeigt eine alternative Ausgestaltung eines Wäschers als Walzenwäscher 30. Die Zufuhr der Suspension erfolgt über einen sogenannten Stoffauflauf 31, durch den die Suspension zwischen die Walze 32 und ein Sieb 33 eingedüst wird. Das Sieb 33 wird mittels einer Antriebsrolle 34 angetrieben und das Filtrat, d.h. der Gutstoff durch den Filtrataustrag 35 ausgetragen.

In Fig. 5 sind die Stoffströme bei einer Flotationsanlage 40 nach dem Stand der Technik dargestellt. Die Flotationsanlage besteht dabei aus den Primärzellen 41 und den Sekundärzellen 42. Der Suspensionszulauf 43 wird in die Primärzellen 41 geleitet, von wo der Überlauf 44 in die Sekundärzellen 42 geleitet wird. Der Gutstoff 45 wird aus den Primärzellen 41 abgeleitet, während der Überlauf 46 mit den angereicherten Feststoffen den Sekundärzellen 42 entnommen wird. An einigen Stellen des Systems wird noch Spritzwasser 47 zugeführt. Die Werte der einzelnen Stoffströme sind der nachfolgenden Tabelle 1 zu entnehmen.

**Tabelle 1**

| Bezeichnung | Nr. | Volumenstrom gesamt [I/min] | Feststoffanteil [%] | rel. Ascheanteil am Feststoff [%] |
|---|---|---|---|---|
| Zulauf | 43 | 15000 | 1,2 | 25,0 |
| Rückführung | 44 | 3200 | 1,07 | 66,0 |
| Durchlauf/ Gutstoff | 45 | 15500 | 1,07 | 21,2 |
| Ablauf/ Überlauf | 46 | 550 | 2,55 | 70,0 |
| Spritzwasser | 47 | 1050 | - | - |

Fig. 6 zeigt die Stoffströme einer Flotationsanlage 40 gemäß Fig. 2 mit den Primärzellen 41 und Sekundärzellen 42. Der Suspensionszulauf 43 wird in die Primärzellen 41 geleitet, von wo der Überlauf 44 in die Entaschungsvorrichtung, speziell den Wäscher 48 geleitet wird. Der "Gutstoff" 49 aus dem Wäscher 48 wird mittels Verdünnungswasser 52 auf eine Stoffdichte unter 1 % gebracht und bei 53 den Sekundärzellen 42 zugeführt. Der hoch füllstoffbeladene Anteil 50 aus dem Wäscher wird mit dem Überlauf 46 aus den Sekundärzellen 42 gemischt und als Gesamtüber-lauf 51 aus dem System ausgetragen. Die Werte der einzelnen Stoffströme sind der nachfolgenden Tabelle 2 zu entnehmen.

**Tabelle 2**

| Bezeichnung | Nr. | Volumenstrom gesamt [I/min] | Feststoffanteil [%] | rel. Asche-anteil am Feststoff [%] |
|---|---|---|---|---|
| Zulauf P1 | 43 | 15000 | 1,2 | 25,0 |
| Schaum Ablauf Primärzellen | 44 | 2550 | 1,11 | 64,8 |
| Durchlauf/ Gutstoff | 45 | 14480 | 1,11 | 17,2 |
| Überlauf Sekundärzellen | 46 | 30 | 2,3 | 72,7 |
| Spritzwasser | 47 | 1100 | - | - |
| Rücklauf nach Wäscher 48 | 49 | 240 | 3,9 | 14,7 |
| Ablauf nach Wäscher 48 | 50 | 2300 | 0,8 | 89,5 |
| Überlauf gesamt | 51 | 2330 | 0,8 | 88,9 |
| Verdünnungswasser | 52 | 720 | - | - |
| Rücklauf in Sekundärzellen | 53 | 960 | 0,97 | 14,7 |
| | | | | |

Im Vergleich der Tabellen 1 und 2 kann man erkennen, dass bei gleichem Feststoff und Ascheeintrag beim Verfahren nach der Erfindung ein höherer Feststoffgehalt bei niedrigerem rel. Ascheanteil als Gutstoff erhalten wird. Somit wird praktisch doppelt soviel Asche ausgetragen, wie beim Verfahren nach dem Stand der Technik.

Die Entfernung eines großen Prozentsatzes des Füllstoffanteiles aus dem Produktionsstrom führt zu einem weiteren positiven Effekt und zwar zu einer zusätzlichen Entfernung von kleinen Druckpartikel, die im Flotationsprozess nur schwer abflotierbar sind. In Folge steigt der Weissegrad oder die Helligkeit mit an.

## Patentansprüche

1. Verfahren zur Belüftung von Suspensionen, insbesondere zur Flotation, beispielsweise beim Deinken von Faserstoffsuspensionen, mit zumindest zwei Zellen, wobei die Suspension zumindest einer Primärzelle zugeführt wird, der überlauf zumindest einer Primärzelle gesammelter wird und zuerst in einem Waschprozess entascht wird, bevorer zumindest einer Sekundärzelle zugeführt wird, und wobei deren Gutstoff wieder in die Primärzelle gelangt.

2. Verfahren nach Anspruch 1, **dadurch gekennzeichnet, dass** in jeder zelle ein eigener, getrennter Flüssigkeitskreislauf vorgesehen ist.

3. Verfahren nach Anspruch 1 oder 2, **dadurch gekennzeichnet, dass** die Feststoffsuspension vor Eintritt in die Sekundärzellen auf ca. 0,6 - 1,4 % Stoffdichte, insbesondere 0,8 - 1,3 % Stoffdichte, verdünnt wird.

4. Verfahren nach Anspruch 3, **dadurch gekennzeichnet, dass** die Gutstoffströme von zumindest zwei Waschprozessen gemeinsam einem weiteren Waschprozess zugeführt werden.

5. Verfahren nach Anspruch 3 oder 4, **dadurch gekennzeichnet, dass** der/ die Rejektstoffström(e) des einen oder der mehreren Waschprozesse gemeinsam einem weiteren Waschprozess (Doppelwäsche) zugeführt werden.

6. Verfahren nach einem der Ansprüche 1 bis 5, **dadurch gekennzeichnet, dass** der Gutstoff des Gesamtverfahrens bei einem Eingangsfüllstoffgehalt von ca. 23 % und höher einen Ascheanteil von unter ca. 20 %, vorteilhaft unter 15 % aufweist.

7. Vorrichtung zur Belüftung von Suspensionen, insbesondere zur Flotation, beispielsweise beim Deinken von Faserstoffsuspensionen, mit zumindest zwei Zellen (P1, P2, P3, P4, S1, S2), **dadurch gekennzeichnet, dass** in einer Schaumrinne (3) gesammelter Überlauf aus zumindest einer Primärzelle (P1, P2, P3, P4) zumindest einer Sekundärzelle (S1, S2) zuführbar ist, deren Gutstoff wieder der Primärzelle (P1, P2, P3, P4) zuführbar ist, wobei ein Wäscher (16) zwischen Primär- und Sekundärzellen zwischengeschaltet ist.

8. Vorrichtung nach Anspruch 7, **dadurch gekennzeichnet, dass** in jeder Zelle (P1, P2, P3, P4, S1, S2) ein eigener, getrennter Flüssigkeitskreislauf (6) vorgesehen ist.

9. Vorrichtung nach Ansprüch 7, **dadurch gekennzeichnet, dass** zwischen Wäscher (16) und Sekundärzellen (S1, S2) eine Verdünnungswasserleitung (52) mündet.

10. Vorrichtung nach Anspruch 9, **dadurch gekennzeichnet, dass** die Gutstoffströme von zumindest zwei Wäschern (16) gemeinsam einem weiteren Wäscher (16) zugeführt werden.

11. Vorrichtung nach Anspruch 9 oder 10, **dadurch gekennzeichnet, dass** die Rejektstoffströme der zumindest zwei Wäscher (16) gemeinsam einem weiteren Wäscher zugeführt werden.

12. Vorrichtung nach einem der Ansprüche 7 bis 11, **dadurch gekennzeichnet, dass** der bzw. die Wäscher (16) als Rotationswäscher (20) mit vertikaler Rotorachse ausgebildet ist bzw. sind.

13. Vorrichtung nach einem der Ansprüche 7 bis 11, **dadurch gekennzeichnet, dass** der bzw. die Wäscher (16) als Walzenwäscher (30) ausgebildet ist bzw. sind.

## Claims

1. Process for aerating suspensions, particularly to flotate them, for example in deinking of pulp suspensions, with at least two cells, where the suspension is fed to at least one primary cell, the overflow from at least one primary cell is collected and the ash is removed from it first of all in a washing process before it is fed to at least one secondary cell, and where its accept flow returns to the primary cell.

2. Process according to Claim 1, **characterised by** each cell having its own, separate liquid loop.

3. Process according to Claim 1 or 2, **characterised by** the solids suspension being diluted to a consistency of approximately 0.6 - 1.4%, particularly to a consistency of 0.8 - 1.3%, before entering the secondary cells.

4. Process according to Claim 3, **characterised by** the accept flows from at least two washing processes being fed together to a further washing process.

5. Process according to Claim 3 or 4, **characterised by** the reject flow(s) from the one or the several washing processes being fed together to a further washing process (double washing).

6. Process according to one of Claims 1 to 5, **characterised by** the accept flow from the entire process having an ash content of less than approximately 20%, preferably less than 15%, at an ingoing filler content of approximately 23% and more.

7. Device for aerating suspensions, particularly for flotation, for example in deinking of pulp suspensions, with at least two cells (P1, P2, P3, P4, S1, S2), **characterised by** the overflow from at least one primary cell (P1, P2, P3, P4), which is collected in a foam channel (3), being able to be fed to at least one secondary cell (S1, S2), from which the accept flow can be fed again to the primary cell (P1, P2, P3, P4), where a washer (16) is interposed between primary and secondary cells.

8. Device according to Claim 7, **characterised by** each cell (P1, P2, P3, P4, S1, S2) having its own separate liquid loop (6).

9. Device according to Claim 7, **characterised by** a dilution water pipe (52) discharging between the washer (16) and secondary cells (S1, S2).

10. Device according to Claim 9, **characterised by** the accept flows from at least two washers (16) being fed together to a further washer (16).

11. Device according to Claim 9 or 10, **characterised by** the reject flows from the at least two washers (16) being fed together to a further washer.

12. Device according to one of Claims 7 to 11, **characterised by** the washer or washers (16) being designed as rotation washers (20) with vertical rotor axis.

13. Device according to one of Claims 7 to 11, **characterised by** the washer or washers (16) being designed as roll washers (30).

## Revendications

1. Procédé d'aération de suspensions, surtout pour la flottation, p.ex. dans le cadre du désencrage de suspensions de pâtes fibreuses, comportant au moins deux cellules, la suspension étant alimentée vers au moins une cellule primaire, le surverse d'au moins une cellule étant collecté et les cendres étant enlevées par un procédé de lavage avant d'amener le surverse vers au moins une cellule secondaire, sa pâte acceptée étant retournée à la cellule primaire.

2. Procédé selon la revendication 1, **caractérisé en ce que** chaque cellule comporte un circuit de liquide séparé individuel.

3. Procédé selon la revendication 1 ou 2, **caractérisé en ce que** la suspension des solides est diluée à env. 0,6 - 1,4 % de concentration avant l'entrée aux cellules secondaires, surtout à 0,8 - 1,3 % de concentration de pâte.

4. Procédé selon la revendication 3, **caractérisé en ce que** les courants de pâte acceptée provenant d'au moins deux procédés de lavage sont amenés ensemble à un procédé de lavage commun.

5. Procédé selon la revendication 3 ou 4, **caractérisé en ce que** le ou les courant(s) de pâte rejetée provenant d'un ou de plusieurs procédés de lavage est/sont amené(s) à un procédé de lavage ultérieur (lavage double).

6. Procédé selon l'une des revendications 1 à 5, **caractérisé en ce que** la teneur de cendres de la pâte acceptée à l'issue du procédé global, à la base d'une teneur initiale de matière de charge d'env. 23%, est au-dessous d'env. 20%, de préférence au-dessous de 15%.

7. Dispositif d'aération de suspensions, surtout pour la flottation, p.ex. dans le cadre du désencrage de suspensions de pâtes fibreuses, comportant au moins deux cellules (P1, P2, P3, P4, S1, S2), **caractérisé en ce que** le surverse collecté dans une conduite à écume (3) d'au moins une cellule primaire (P1, P2, P3, P4) peut être amené vers au moins une cellule secondaire (S1, S2), dont la pâte acceptée peut être à son tour ramenée à la cellule primaire (P1, P2, P3, P4), un laveur (16) étant inséré entre les cellules primaires et secondaires.

8. Dispositif selon la revendication 7, **caractérisé en ce qu'**un circuit de liquide individuel séparé (6) est prévu pour chaque cellule (P1, P2, P3, P4, S1, S2).

9. Dispositif selon la revendication 7, **caractérisé en ce que** qu'une conduite à eau de dilution (52) se jette entre le laveur (16) et les cellules secondaires (S1, S2).

10. Dispositif selon la revendication 9, **caractérisé en ce que** les courants de pâte acceptée provenant d'au moins deux laveurs (16) sont amenés ensemble à un autre laveur (16).

11. Dispositif selon la revendication 9 ou 10, **caractérisé en ce que** les courants de pâte rejetée provenant d'au moins deux laveurs (16) sont amenés ensemble vers un autre laveur (16).

12. Dispositif selon l'une des revendications 7 à 11, **caractérisé en ce que** le ou les laveurs (16) est/sont étudié(s) en tant que laveur(s) rotatif(s) (20) comportant un axe de rotor vertical.

13. Dispositif selon l'une des revendications 7 à 11, **caractérisé en ce que** le ou les laveurs (16) est/sont étudié(s) en tant que laveur(s) à rouleaux (30).
